(19)

**Europäisches Patentamt**
**European Patent Office**
**Office européen des brevets**

(11) **EP 4 635 909 A1**

(12) **EUROPEAN PATENT APPLICATION**
published in accordance with Art. 153(4) EPC

(43) Date of publication:
**22.10.2025 Bulletin 2025/43**

(21) Application number: **23903873.0**

(22) Date of filing: **05.12.2023**

(51) International Patent Classification (IPC):
**C01B 17/22** $^{(2006.01)}$     **H01M 10/0562** $^{(2010.01)}$

(52) Cooperative Patent Classification (CPC):
**C01B 17/22; H01M 10/0562;** Y02E 60/10

(86) International application number:
**PCT/KR2023/019933**

(87) International publication number:
**WO 2024/128670 (20.06.2024 Gazette 2024/25)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **16.12.2022 KR 20220176717**

(71) Applicants:
• **POSCO Holdings Inc.**
  **Pohang-si, Gyeongsangbuk-do 37859 (KR)**
• **RESEARCH INSTITUTE OF INDUSTRIAL
  SCIENCE &
  TECHNOLOGY**
  **Pohang-si, Gyeongsangbuk-do 37673 (KR)**

(72) Inventors:
• **KO, Young-Seon**
  **Pohang-si Gyeongsangbuk-do 37837 (KR)**
• **KIM, Byoung Ju**
  **Pohang-si Gyeongsangbuk-do 37671 (KR)**
• **SEO, Han Seok**
  **Pohang-si, Gyeongsangbuk-do 37835 (KR)**
• **LEE, Sihwa**
  **Seoul 07542 (KR)**
• **KWON, Ohmin**
  **Incheon 22018 (KR)**
• **SON, Young Geun**
  **Pohang-si, Gyeongsangbuk-do 37669 (KR)**
• **PARK, Jung Kwan**
  **Pohang-si, Gyeongsangbuk-do 37566 (KR)**

(74) Representative: **Pfenning, Meinig & Partner mbB
Patent- und Rechtsanwälte
Theresienhöhe 11a
80339 München (DE)**

(54) **LITHIUM SULFIDE POWDER AND METHOD OF MANUFACTURING SAME**

(57)     The present invention relates to a lithium sulfide powder and a method for producing the same. The method comprises:

a step of mixing a carbon material and a lithium compound to prepare a lithium-carbon compound; a step of filtering a solution obtained by mixing the lithium-carbon compound with a solvent; a step of adding sulfur powder to the filtrate such that the molar ratio of sulfur added to lithium ions is from 0.01 to 0.04; a step of drying the filtrate; and a step of heat-treating the dried material, whereby lithium sulfide having an oxygen content of from 1.0% to less than 3.5% can be produced.

【Fig. 1】

## Description

### [Technical Field]

The present invention relates to a solid-state electrolyte, and more particularly, to a lithium sulfide powder for use in a solid-state electrolyte and a method for producing the same.

### [BACKGROUND ART]

Rechargeable batteries are widely used in a variety of applications ranging from small electronic devices such as mobile phones or notebook computers to large-scale devices such as electric vehicles (EVs) and energy storage systems (ESSs). As the application of rechargeable batteries expands into all areas of daily life, not only performance aspects such as high energy density and long cycle life, but also safety, have become essential requirements.

Conventional lithium secondary batteries primarily use liquid electrolytes based on organic solvents. However, issues such as leakage and fire hazards associated with liquid electrolytes have arisen, necessitating stringent packaging. Such strict packaging imposes limitations on achieving further improvements in energy density. Accordingly, there has been a growing demand for all-solid-state batteries employing inorganic solid electrolytes instead of organic liquid electrolytes.

The all-solid-state battery enables the fabrication of battery cells with enhanced safety by excluding organic solvents used in liquid electrolytes. In addition, inorganic solid electrolytes offer high stability without decomposition over a wide voltage range, providing the advantage of enabling the use of high-voltage electrode materials.

Solid electrolytes are classified into oxide-based and sulfide-based types. Compared to oxide-based solid electrolytes, sulfide-based solid electrolytes exhibit higher ionic conductivity. Lithium sulfide ($Li_2S$) is the main raw material used in sulfide-based solid electrolytes. Various methods for synthesizing $Li_2S$ have been employed, including high-energy ball milling, wet plasma processes, and wet/dry processes using lithium metal. However, these methods face challenges such as difficulty in kinetic control, high cost of starting materials, elevated processing costs, and environmental issues, making commercialization difficult.

In contrast, the carbonthermal reduction method offers advantages in that it does not involve the use of toxic hydrogen sulfide ($H_2S$) gas and allows the use of low-cost lithium sulfate ($Li_2SO_4$). However, in the solid-phase thermal reduction step, it is necessary to subsequently use a solvent for extraction after calcination. This introduces the need to address issues related to the control of the physical properties of the extraction solution, drying of the extraction solution, calcination, and crystallization, in order to ensure product purity.

In particular, since the physical properties of the dried material vary depending on the drying method of the extraction solution, the appropriate drying method for the extraction solution is a key factor in obtaining high-quality lithium sulfide. Therefore, there is a need for a method of synthesizing lithium sulfide by controlling the drying method of the extraction solution in which lithium sulfide is dissolved.

Representative methods include reacting high-purity hydrogen sulfide with expensive metallic or organic lithium compounds to produce high-purity lithium sulfide. Recently, a relatively low-cost production method using lithium hydroxide has emerged as a viable mass-production technology. Additionally, another known method involves thermally reducing inexpensive lithium sulfate in the gas phase to produce lithium sulfide, which is considered a cost-effective approach.

However, in the extraction process after thermal reduction, residual impurities often remain. In particular, oxygen-containing impurities may remain in the final lithium sulfide product, thereby adversely affecting the performance of the solid electrolyte.

### [DETAILED DESCRIPTION OF THE INVENTION]

### [TECHNICAL PROBLEM]

An object of the present invention is to provide a lithium sulfide powder in which oxygen-containing impurities are effectively controlled.

Another object of the present invention is to provide a method for producing lithium sulfide that serves as a high-purity raw material for sulfide-based solid electrolytes.

### [TECHNICAL SOLUTION]

According to one embodiment of the present invention, a lithium sulfide powder is provided for use in a solid-state electrolyte. The lithium sulfide powder comprises lithium oxide ($Li_2O$) and has an oxygen content of 3.0% or less.

In a specific embodiment, the lithium sulfide powder may satisfy the following Equation 1:

<Equation 1>

$$[Li_2O] \times \text{oxygen content} \leq 10.0$$

(wherein $[Li_2O]$ represents the intensity ratio [%] of the main XRD diffraction peak of lithium oxide)

In another embodiment, the content of lithium oxide ($Li_2O$) may be 5.6 wt% or less. In still another embodiment, the intensity ratio of the main XRD diffraction peak of $Li_2O$ may be less than 3%.

According to another embodiment of the present invention, a method for producing lithium sulfide is provided. The method comprises:

mixing a carbon material and a lithium compound to prepare a lithium-carbon compound;
filtering a solution prepared by mixing the lithium-carbon compound with a solvent; and
adding sulfur powder to the filtrate such that the molar ratio of sulfur added to lithium ions is from 0.01 to 0.04, followed by heat treatment,
whereby lithium sulfide having an oxygen content of less than 3.5% can be produced.

In one embodiment, the content ratio of the lithium-carbon compound to the solvent satisfies the following Equation 2:

<Equation 2>

$$0.10 \leq [\text{lithium-carbon compound}]/[\text{solvent}] \leq 0.30$$

(wherein [lithium-carbon compound] and [solvent] represent the content (kg) of the lithium-carbon compound and the volume (L) of the solvent, respectively)

In a preferred embodiment, the ratio of Equation 2 is from 0.14 to 0.20.

In another embodiment, the contents of the lithium-carbon compound and the sulfur powder satisfy the following Equation 3:

<Equation 3>

$$10.0 \leq [\text{lithium sulfide in lithium-carbon compound}]/[\text{sulfur powder}] \leq 100.0$$

(wherein [lithium sulfide in lithium-carbon compound] and [sulfur powder] represent the amount (g) of lithium sulfide in the lithium-carbon compound and the amount (g) of sulfur powder added, respectively)

Preferably, the range defined in Equation 3 is from 20.0 to 80.0.

In one embodiment, the step of preparing the lithium-carbon compound comprises heat-treating the carbon material and the lithium compound at a temperature ranging from 700°C to 900°C.

In another embodiment, the step of adding sulfur powder to the filtrate and performing heat treatment comprises: drying the filtrate; and heat-treating the dried material.

The solvent used may include at least one selected from the group consisting of ethanol, methanol, isopropyl alcohol, ethylene glycol, and butyl alcohol.

In a preferred embodiment, the flow rate of the inert gas atmosphere during the heat treatment of the dried material may be from 5 to 15 L/min.

In another embodiment, the sulfur powder may be added to the filtrate in a molar ratio of 0.012 to 0.037 relative to lithium ions during the heat treatment step.

**[ADVANTAGEOUS EFFECTS]**

According to one embodiment of the present invention, the lithium sulfide compound provides a lithium sulfide compound suitable for use as a raw material for sulfide-based solid electrolytes, by effectively controlling oxygen-containing impurities generated during purification using an organic solvent.

According to another embodiment of the present invention, the method for producing the lithium sulfide compound provides lithium sulfide having the aforementioned advantages.

[Description of the Drawings]

FIG. 1 is a graph showing the variation in oxygen content and impurity concentration in the lithium sulfide product according to the amount of sulfur powder added.
FIGS. 2A to 2F illustrate the microstructures of lithium sulfide compounds according to the examples and comparative examples of the present invention.

[BEST MODE FOR INVENTION]

The terms such as "first", "second", and "third" may be used to describe various components, regions, layers, and/or sections, but are not limited thereto. These terms are used merely to distinguish one component, region, layer, or section from another. Accordingly, a "first" component, region, layer, or section described hereinafter may be referred to as a "second" component, region, layer, or section without departing from the scope of the present invention.

The terminology used herein is for the purpose of describing particular embodiments only and is not intended to be limiting of the invention. As used herein, the singular forms "a", "an", and "the" are intended to include the plural forms as well, unless the context clearly indicates otherwise. The term "comprising" as used herein specifies the presence of stated features, regions, integers, steps, operations, elements, and/or components, but does not preclude the presence or addition of one or more other features, regions, integers, steps, operations, elements, components, and/or groups thereof.

When a component is referred to as being "on" or "above" another component, it may be directly on or above the other component, or intervening components may be present. In contrast, when a component is referred to as being "directly on" or "immediately above" another component, there are no intervening components present.

Unless otherwise defined, all terms including technical and scientific terms used herein have the same meanings as commonly understood by one of ordinary skill in the art to which the invention pertains. Terms generally used in standard dictionaries should be interpreted in accordance with their meanings in the context of the relevant art and the present disclosure, and are not to be interpreted in an idealized or overly formal sense unless expressly so defined herein. Further, unless otherwise specified, all percentages (%) are by weight, and 1 ppm refers to 0.0001 wt%.

Hereinafter, embodiments of the present invention will be described in detail so that those skilled in the art may readily carry out the invention. However, the present invention may be embodied in many different forms and should not be construed as limited to the embodiments set forth herein.

According to one embodiment of the present invention, a lithium sulfide compound is provided for use in a solid-state electrolyte. The compound includes lithium oxide ($Li_2O$). High-purity lithium sulfide may contain lithium oxide ($Li_2O$) as an impurity due to the thermal treatment process.

In one embodiment, the oxygen content is 3.0% or less. Specifically, the oxygen content may range from 1.0% to 2.6%, and more particularly from 1.23% to 2.55%.

In another embodiment, the content of lithium oxide ($Li_2O$) may be 5.6 wt% or less. As an impurity, the lithium oxide content is preferably maintained within the specified range in order to ensure that the oxygen-containing impurity level-namely, the lithium oxide impurity-is controlled to a suitable level for use as a raw material for electrolytes.

In one embodiment, the intensity ratio of the main XRD diffraction peak of lithium oxide ($Li_2O$) may be less than 3%, and more specifically, 2.5% or less.

If the content of $Li_2O$ or the intensity ratio of its XRD main peak exceeds the upper limit, the lithium oxide impurity exceeds the tolerable level, resulting in degradation of the electrolyte performance. If they fall below the lower limit, amorphous carbon may remain in the product, also leading to degraded performance.

In one embodiment, the lithium sulfide powder of the present invention satisfies the following Equation 1:

$$<\text{Equation 1}>$$

$$[Li_2O] \times \text{oxygen content} \leq 10.0$$

(wherein [$Li_2O$] represents the intensity ratio of the XRD main peak of $Li_2O$ in the lithium sulfide powder)

Equation 1 represents the correlation between the XRD intensity ratio of lithium oxide and the oxygen content. This index serves as a guide for lithium sulfide applicable to sulfide-based solid electrolytes. The value of Equation 1 is preferably 10.0 or less, more preferably 6.5 or less, and even more preferably within the range of 1.2 to 6.4.

Satisfying this index ensures that the oxygen content is appropriately controlled, and the ionic conductivity of the sulfide solid electrolyte can reach a desired level. If the value falls outside the defined range, the lithium sulfide is unsuitable for use in solid-state electrolytes.

According to another embodiment, a method for producing lithium sulfide includes:

mixing a carbon material and a lithium compound to prepare a lithium-carbon compound;
filtering a solution obtained by mixing the lithium-carbon compound with a solvent; and
adding sulfur powder to the filtrate and performing heat treatment.

The lithium sulfide obtained by this method corresponds to the descriptions provided above.

In one embodiment, the carbon material may include, without limitation, at least one selected from soft carbon, hard carbon, petroleum-based coke, coal-based needle coke, coal-based pitch coke, natural graphite, and artificial graphite. The lithium compound may include, without limitation, at least one selected from lithium sulfate, lithium hydroxide, lithium oxide, and lithium carbonate.

The step of preparing the lithium-carbon compound may be carried out by heat-treating the carbon material with the lithium compound. The heat treatment may be performed at a temperature ranging from 700°C to 1,200°C. **In** one embodiment, the heating rate may be from 5°C/min to 10°C/min.

The dwell time at the peak temperature may be from 1 to 6 hours, and preferably from 1 to 3 hours, followed by natural cooling. Meeting the specified temperature and time ensures sufficient reduction of the lithium compound by carbon. If these conditions are not met, incomplete reduction may occur.

The heat treatment may be conducted under an inert gas atmosphere. The inert gas may include at least one selected from helium, neon, krypton, xenon, nitrogen, and argon.

The filtering step includes mixing the lithium-carbon compound with a solvent and filtering the resulting solution. The solvent may include, without limitation, at least one selected from ethanol, methanol, isopropyl alcohol, ethylene glycol, and butyl alcohol.

In one embodiment, the content ratio of lithium-carbon compound to solvent satisfies the following Equation 2:

<Equation 2>

$$0.10 \leq [\text{lithium-carbon compound}]/[\text{solvent}] \leq 0.30$$

(where [lithium-carbon compound] and [solvent] refer to the content (kg) and volume (L), respectively)

Specifically, the ratio may range from 0.14 to 0.20. If the solvent ratio is too high, excessive solvent use leads to poor process economics. If it is too low, sufficient filtration may not be achieved.

The step of adding sulfur ($S_8$) powder and performing heat treatment includes:
drying the filtrate; and heat-treating the dried material.

In one embodiment, sulfur powder is added before the drying step, allowing the sulfur to dissolve fully during drying, compensating for polysulfide deficiencies.

The sulfur powder is preferably added in a molar ratio of 0.01 to 0.04 relative to lithium ions, and more specifically from 0.012 to 0.037.

By adding sulfur powder to the filtered solid, high-purity lithium sulfide suitable for use in all-solid-state batteries can be produced. Specifically, by controlling the addition ratio of sulfur powder within the defined range, lithium sulfide having an oxygen content of 3 wt% or less can be synthesized.

In the step of adding sulfur ($S_8$) powder to the filtrate followed by heat treatment, the contents of the lithium-carbon compound and the sulfur powder may satisfy the following Equation 3:

<Equation 3>

$$10.0 \leq [\text{lithium sulfide in lithium-carbon compound}]/[\text{sulfur powder}] \leq 100.0$$

(wherein [lithium sulfide in lithium-carbon compound] and [sulfur powder] represent the usage amount (g) of lithium sulfide within the lithium-carbon compound and the input amount (g) of sulfur powder, respectively)

Equation 3 may range from 10.0 to 100.0, preferably from 20.0 to 80.0, and more preferably from 22.0 to 76.0. This equation defines the relationship between the lithium-carbon compound and sulfur powder, and serves as an index for the sulfur addition range that influences the quality of the synthesized lithium sulfide.

If the value exceeds the upper limit of Equation 3, excessive sulfur may react with a portion of the solvent during drying and heat treatment, resulting in undesirable organic sulfur residues in the final lithium sulfide, thereby reducing purity. If the value falls below the lower limit, the effectiveness of sulfur addition becomes insufficient.

The drying step for the filtrate may involve vacuum concentration and drying of the filtrate. In one embodiment, drying may be performed at a temperature ranging from 40°C to 70°C and under a vacuum pressure of 40 mbar or less.

The drying process may employ vacuum distillation, and may be continued until ethanol is no longer discharged through the distillation apparatus.

The heat treatment of the dried material is performed to obtain the final lithium sulfide ($Li_2S$) by applying heat. In one embodiment, the heat treatment may be conducted at a temperature ranging from 400°C to 800°C, and more preferably from 500°C to 800°C. The heating rate may be from 5°C/min to 20°C/min.

In one embodiment, the dwell time at the maximum temperature may range from 1 to 6 hours, and more preferably from 1 to 3 hours. The heat treatment may also be conducted at a heating rate of 1°C/min to 10°C/min, preferably from 2°C/min to 7°C/min. By satisfying the above-described temperature, heating rate, and dwell time, the target lithium sulfide can be appropriately synthesized.

The heat treatment may be carried out under an inert gas atmosphere. The inert gas may include, for example, at least one selected from helium, neon, krypton, xenon, nitrogen, and argon.

In one embodiment, the flow rate of the inert gas during the heat treatment may be from 5 to 15 L/min, preferably from 8 to 12 L/min.

If the flow rate exceeds the upper limit, material loss may occur. If the flow rate falls below the lower limit, residual solvent or solvent-derived decomposition products may remain, lowering the purity of the final product.

After the heat treatment is completed under the above-described conditions, natural cooling may be performed.

**[MODE FOR INVENTION]**

Hereinafter, specific examples of the present invention will be described. However, the following examples are provided for illustrative purposes only and are not intended to limit the scope of the invention.

**Examples**

**Example: Preparation of Thermally Reduced Product**

6 kg of artificial graphite and 2 kg of lithium sulfate monohydrate were uniformly mixed. The mixture was then heated under an inert argon (Ar) atmosphere at a heating rate of 5°C/min up to 900°C. After reaching 900°C, the mixture was maintained at this temperature for 2.5 hours. Through this thermal process, lithium sulfate was reduced to lithium sulfide, resulting in a composite mixture with the artificial graphite. After calcination, the resulting mixture was naturally cooled and stored in a glove box under an inert gas atmosphere. Equal amounts of this thermally reduced product were used for each extraction condition described below.

**Experiment: Variation in Extraction Conditions for Lithium Sulfide**

When lithium sulfate is mixed with an excess amount of carbon and thermally treated at 900°C under an inert atmosphere, lithium sulfate is reduced to lithium sulfide in the presence of excess carbon. The resulting product is then dispersed in ethanol and stirred. Lithium sulfide dissolves in ethanol, whereas the carbon remains undissolved, enabling lithium sulfide to be selectively extracted through simple filtration.

The filtered solution is then dried to yield a solid powder. The forward direction of Reaction Scheme 1 below represents the drying process, and the reverse direction represents the extraction step.

$$\text{<Reaction Scheme 1>} \qquad LiSH + Li(CH_3CH_2O) \leftrightarrow Li_2S(s) + CH_3CH_2OH(l)$$

After drying, the remaining solvent in the powder can be removed through high-temperature heat treatment, yielding purified lithium sulfide. However, during evaporation and drying of the filtrate, part of the polysulfide ions may be lost as hydrogen sulfide gas due to acid-base reactions with ethanol or self-reaction between polysulfide ions, as shown in Reaction Schemes 2 and 3.

$$\text{<Reaction Scheme 2>} \qquad LiSH + Li(CH_3CH_2O) + CH_3CH_2OH \leftrightarrow 2Li(CH_3CH_2O) + H_2S\uparrow$$

$$\text{<Reaction Scheme 3>} \qquad LiSH + LiSH \leftrightarrow Li_2S + H_2S\uparrow$$

Such loss of polysulfide ions leads to the formation of excess lithium ethoxide in the dried powder. Upon heat treatment, thermal decomposition of lithium ethoxide may generate impurities such as lithium hydroxide, lithium oxide, or lithium carbonate.

To compensate for the polysulfide ion deficiency during drying, the present invention includes the addition of elemental sulfur ($S_8$) powder to the filtrate prior to drying. The sulfur powder was fully dissolved by stirring before initiating the drying process. The ratio of LiSH to Li($CH_3CH_2O$) was controlled by adjusting the amount of sulfur powder added.

Specifically, the thermally reduced product was dispersed in ethanol and stirred thoroughly under an inert atmosphere. After stirring, the resulting slurry was filtered. Undissolved artificial graphite remained on the filter as a wet residue, while the lithium sulfide-containing filtrate passed through to the collection flask. The solution appeared light yellow-green in color.

Sulfur ($S_8$) powder with a yellow color was added to the filtrate and stirred until completely dissolved. The resulting solution was transferred to a round-bottom flask attached to a rotary evaporator under vacuum. The vacuum level was maintained at 30 mbar, and the flask was rotated in a 60°C water bath for approximately 3 hours to concentrate and dry the solution.

The dried powder was then heat-treated at 150°C for 2 hours, followed by another 2-hour treatment at 300°C. Finally, the sample was heat-treated at 800°C for 2 hours to obtain lithium sulfide powder. The heating rate was maintained at 5°C/min, and the Ar gas flow rate was set to 10 L/min.

**Table 1** summarizes the extraction conditions, including the amount of thermally reduced product (C-$Li_2S$), ethanol (EtOH) used, and the amount of sulfur ($S_8$) powder added after filtration.

**Example 1**

    C-$Li_2S$: 0.34 kg
    EtOH: 1.7 L
    Sulfur ($S_8$): 1.5 g

**Example 2**

Same as Example 1, except sulfur ($S_8$) input: 1.0 g

**Example 3**

Same as Example 1, except sulfur ($S_8$) input: 0.5 g

**Comparative Example 1**

Same as Example 1, but no sulfur ($S_8$) was added after filtration

**Example 4**

    C-$Li_2S$: 0.20 kg
    EtOH: 1.4 L
    Sulfur ($S_8$): 1.0 g

**Example 5**

Same as Example 1, except sulfur ($S_8$) input: 0.5 g

**Comparative Example 2**

Same as Example 4, but no sulfur ($S_8$) was added after filtration

Table 1 shows the results of lithium sulfide analysis conducted under various extraction conditions, including the amounts of thermally reduced product (C-$Li_2S$), ethanol (EtOH), and sulfur ($S_8$) powder added after filtration.

Specifically, the crystalline phases of the lithium sulfide powders were analyzed using an X-ray diffraction (XRD) instrument manufactured by RIGAKU. In the XRD analysis, the intensity of the main diffraction peak of $Li_2S$ was set to 100%, and the relative intensities of the primary peaks of impurity phases were evaluated based on this reference.

The oxygen content in the lithium sulfide powders was measured using the ON836 elemental analyzer manufactured by LECO. To compare the oxygen distribution, a reference mixture was prepared by grinding reagent-grade lithium sulfide and lithium oxide powders at a weight ratio of 95:5 using a mortar. Additionally, the lithium sulfide powder obtained in Example 3 was analyzed using a scanning electron microscope equipped with energy-dispersive X-ray spectroscopy (SEM/EDXS).

[Table 1]

| Categ ory | Condition of Extraction | | | | | | | XRD Main Peak Intensity Ratio [%] | | | Conten t of Oxyge n | Equation 1 |
|---|---|---|---|---|---|---|---|---|---|---|---|---|
| | Amount of Thermally Reduced Product (C-$Li_2S$) [kg] | Amount of Ethanol (EtOH) Used [L] | Amount of $Li_2S$ in Thermally Reduced Product [g] | Amount of Sulfur ($S_8$) Added After Filtration [g] | $Li_2S$-to-Sulfur Ratio | Thermall y Reduced Product-to-Ethanol Ratio | Molar Ratio of Sulfur ($S_8$) to Lithium Ions [-] | $Li_2S$ [%] | $Li_2CO_3$ [%] | $Li_2O$ [%] | | |
| Ex. 1 | 0.34 | 1.7 | 38 | 1.5 | 25.3 | 0.20 | 0.037 | 100 | 0 | 1.0 | 1.23 | 1.23 |
| Ex. 2 | 0.34 | 1.7 | 38 | 1.0 | 38.0 | 0.20 | 0.025 | 100 | 1.1 | 1.2 | 2.45 | 2.94 |
| Ex. 3 | 0.34 | 1.7 | 38 | 0.5 | 76.0 | 0.20 | 0.012 | 100 | 0 | 2.5 | 2.55 | 6.38 |
| C-Ex. 1 | 0.34 | 1.7 | 38 | 0.0 | - | 0.20 | - | 100 | 0 | 3.0 | 4.04 | 12.12 |
| Ex. 4 | 0.20 | 1.4 | 22 | 1.0 | 22.0 | 0.14 | 0.033 | 100 | 0 | 0.8 | 1.72 | 1.38 |
| Ex. 5 | 0.20 | 1.4 | 22 | 0.5 | 44.0 | 0.14 | 0.016 | 100 | 0 | 0 | 1.86 | 0 |
| C-Ex. 2 | 0.20 | 1.4 | 22 | 0.0 | - | 0.14 | - | 100 | 0 | 3.6 | 3.54 | 12.74 |

As shown in Table 1, lithium oxide ($Li_2O$) was identified as the major impurity in the lithium sulfide product. It was confirmed that as the amount of sulfur powder added to the extraction solution increased, the impurity content decreased, resulting in a reduction in overall oxygen content.

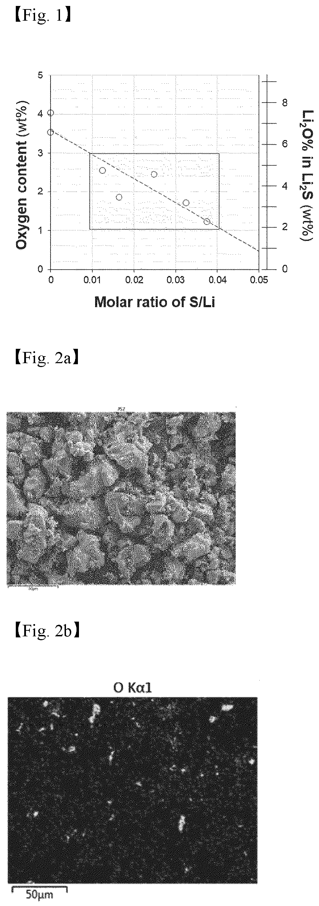

FIG. 1 is a graph illustrating the variation in oxygen content and impurity concentration in the lithium sulfide product depending on the amount of sulfur powder added. Referring to FIG. 1, when the molar ratio of additionally added sulfur relative to the total lithium ion molar amount in the extraction solution was controlled within the range of 0.01 to 0.04, the oxygen content could be adjusted to the range of 1 to 3 wt%, and the major impurity, lithium oxide, could be controlled within the range of 2 to 6 wt%.

However, when sulfur was added within the aforementioned range, the lithium sulfide powder obtained after the final heat treatment exhibited a dark gray or black color, significantly lowering the commercial value of the product.

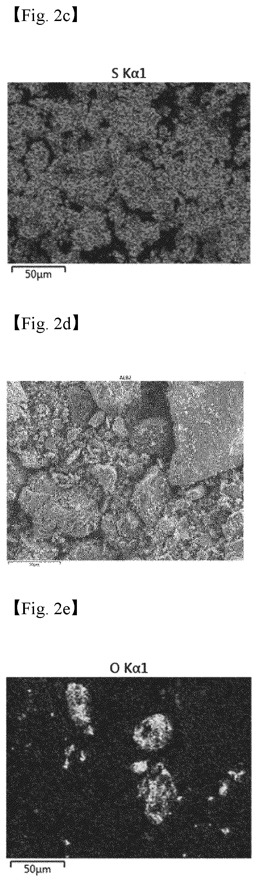

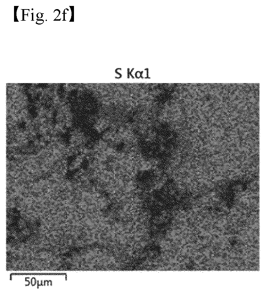

FIGS. 2A to 2F show the microstructures of lithium sulfide compounds prepared according to the examples and comparative examples of the present invention.

FIGS. 2A to 2C present SEM/EDXS analysis results of lithium sulfide prepared in Example 3, while FIGS. 2D to 2F show SEM/EDXS analysis results of a powder physically mixed from reagent-grade lithium sulfide and lithium oxide at a weight ratio of 95:5, representing Comparative Examples.

Referring to FIGS. 2A to 2F, lithium sulfide synthesized according to the method of the present invention exhibited a uniform oxygen distribution within the microstructure, and the degree of agglomeration was approximately 10 $\mu$m or less. In contrast, in the physically mixed sample, lithium oxide particles were observed to be agglomerated to sizes exceeding 50 $\mu$m.

**Solid Electrolyte Fabrication and Performance Evaluation**

The solid electrolyte ($Li_6PS_5Cl$) was synthesized using a dry milling process. $Li_2S$, $P_2S_5$, and LiCl were mixed at 300 rpm for 8 hours using a planetary mill, followed by pelletization at 300 MPa and heat treatment at 550°C under an Ar atmosphere.

After pellet formation, a positive electrode was placed on the top side and an In counter electrode was placed on the bottom side. The assembly was densified under 500 MPa. After cell sealing, a formation cycle was performed at 30°C under a 0.1 C-rate to measure the ionic conductivity.

**Example 6**: Lithium sulfide with an oxygen content of 1.7 wt% was used.

**Comparative Example 3**: Lithium sulfide with an oxygen content of 3.5 wt% was used.

**Comparative Example 4**: Reagent-grade lithium sulfide (purity 99.9%, oxygen content 0.7 wt%) was used.

Table 2 compares the performance of solid electrolytes fabricated according to Example 6, Comparative Example 3, and Comparative Example 4. The impurity types were analyzed using the XRD method described earlier, and the impurity content was calculated from the oxygen concentration values.

[Table 2]

| Category | Purity [%] | Content of Oxygen [wt%] | Impurity | | Ionic Conductivity of Solid Electrolyte [mS·cm$^{-1}$] | Notes |
|---|---|---|---|---|---|---|
| | | | Type | Content [wt%] | | |
| Ex. 6 | - | 1.7 | $Li_2O$ | 3.2 | 5.2 | Synthesized Product 1 |
| C-Ex. 3 | - | 3.5 | $Li_2O$ | 6.5 | 4.3 | Synthesized Product 2 |
| C-Ex. 4 | 99.9 | 0.7 | - | - | 5.5 | Reagent Grade |

As shown in Table 2, in the case of Comparative Example 3, where the oxygen content exceeds the range defined by the present invention, the solid electrolyte exhibited low ionic conductivity. In contrast, when a lithium sulfide having an oxygen content of 3 wt% or less, as in Example 6, was used to fabricate the solid electrolyte, it exhibited an ionic conductivity comparable to that of the solid electrolyte prepared using reagent-grade lithium sulfide, as in Comparative Example 4.

The present invention is not limited to the above-described embodiments and/or examples, but may be implemented in various other forms without departing from the technical spirit or essential features of the invention. It will be understood by those skilled in the art that such variations are within the scope of the invention. Therefore, the embodiments and/or examples described above are to be understood as illustrative in all respects and not as limiting.

**Claims**

1. A lithium sulfide compound for use in a solid-state electrolyte,

   comprising lithium oxide ($Li_2O$),
   wherein the lithium sulfide powder has an oxygen content of 3.0% or less.

2. The lithium sulfide powder of claim 1,

   wherein the lithium sulfide powder satisfies the following Equation 1:

$$\text{<Equation 1>}$$

$$[Li_2O] \times \text{oxygen content} \leq 10.0$$

   (wherein $[Li_2O]$ represents the intensity ratio of the main XRD diffraction peak [%]).

3. The lithium sulfide powder of claim 1,
   wherein the lithium oxide ($Li_2O$) content is 5.6 wt% or less.

4. The lithium sulfide powder of claim 1,
   wherein the intensity ratio of the main XRD diffraction peak of lithium oxide ($Li_2O$) is less than 3%.

5. A method for producing lithium sulfide, comprising:

   mixing a carbon material and a lithium compound to prepare a lithium-carbon compound;
   filtering a solution prepared by mixing the lithium-carbon compound with a solvent; and
   adding sulfur powder to the filtrate such that the molar ratio of sulfur added to lithium ions is from 0.01 to 0.04,
   followed by heat treatment,
   wherein the produced lithium sulfide has an oxygen content of less than 3.5%.

6. The method of claim 5,

   wherein the content of the lithium-carbon compound and the solvent satisfies the following Equation 2:

$$\text{<Equation 2>}$$

$$0.10 \leq [\text{lithium-carbon compound}]/[\text{solvent}] \leq 0.30$$

   (wherein [lithium-carbon compound] and [solvent] represent the content (kg) of the lithium-carbon compound and the volume (L) of the solvent, respectively).

7. The method of claim 6,
   wherein the ratio in Equation 2 is from 0.14 to 0.20.

8. The method of claim 5,

   wherein the contents of the lithium-carbon compound and the sulfur powder satisfy the following Equation 3:

$$\text{<Equation 3>}$$

$$10.0 \leq [\text{lithium sulfide in the lithium-carbon compound}]/[\text{sulfur powder}] \leq 100.0$$

   (wherein [lithium sulfide in the lithium-carbon compound] and [sulfur powder] represent the amount (g) of lithium sulfide in the lithium-carbon compound and the input amount (g) of sulfur powder, respectively).

9.  The method of claim 8,
    wherein the ratio in Equation 3 is from 20.0 to 80.0.

10. The method of claim 5,
    wherein the step of preparing the lithium-carbon compound comprises heat-treating the carbon material and the lithium compound at a temperature ranging from 700°C to 900°C.

11. The method of claim 5,
    wherein the step of adding sulfur powder to the filtrate and performing heat treatment comprises:

    drying the filtrate; and
    heat-treating the dried filtrate.

12. The method of claim 5,
    wherein the solvent comprises at least one selected from the group consisting of ethanol, methanol, isopropyl alcohol, ethylene glycol, and butyl alcohol.

13. The method of claim 5,
    wherein the flow rate of an inert gas atmosphere during the heat treatment of the dried filtrate is from 5 to 15 L/min.

14. The method of claim 5,
    wherein the molar ratio of sulfur added to lithium ions in the step of adding sulfur powder and performing heat treatment is from 0.012 to 0.037.

【Fig. 1】

【Fig. 2a】

【Fig. 2b】

【Fig. 2c】

S Kα1

50µm

【Fig. 2d】

【Fig. 2e】

O Kα1

50µm

【Fig. 2f】

S Kα1

50μm

## INTERNATIONAL SEARCH REPORT

| International application No. |
| --- |
| **PCT/KR2023/019933** |

**A.  CLASSIFICATION OF SUBJECT MATTER**

**C01B 17/22**(2006.01)i; **H01M 10/0562**(2010.01)i

According to International Patent Classification (IPC) or to both national classification and IPC

**B.  FIELDS SEARCHED**

Minimum documentation searched (classification system followed by classification symbols)

C01B 17/22(2006.01); C01B 17/26(2006.01); H01B 1/10(2006.01); H01M 10/052(2010.01); H01M 10/0562(2010.01); H01M 4/02(2006.01); H01M 4/52(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 전고체 전해질(all-solid electrolyte), 황화리튬(lithium sulfide, Li2S), 산화리튬 (lithium oxide, Li2O), 산소(oxygen), 분말(powder), 에탄올(ethanol)

**C.  DOCUMENTS CONSIDERED TO BE RELEVANT**

| Category* | Citation of document, with indication, where appropriate, of the relevant passages | Relevant to claim No. |
| --- | --- | --- |
| X | KR 10-2022-0087916 A (POSCO et al.) 27 June 2022 (2022-06-27)<br>See paragraphs [0002]-[0061]; example 1; and table 2. | 1-4 |
| Y |  | 5-14 |
| Y | KR 10-2013-0130818 A (MITSUI MINING & SMELTING CO., LTD.) 02 December 2013 (2013-12-02)<br>See paragraphs [0024]-[0025]. | 5-14 |
| A | KR 10-2021-0120126 A (MITSUI MINING & SMELTING CO., LTD.) 06 October 2021 (2021-10-06)<br>See entire document. | 1-14 |
| A | WO 2022-221729 A1 (SOLID POWER OPERATING, INC.) 20 October 2022 (2022-10-20)<br>See entire document. | 1-14 |
| A | JP 2009-176484 A (IDEMITSU KOSAN CO., LTD.) 06 August 2009 (2009-08-06)<br>See entire document. | 1-14 |

| ☐ Further documents are listed in the continuation of Box C. | ☑ See patent family annex. |
| --- | --- |

| *     Special categories of cited documents: | "T"   later document published after the international filing date or priority date and not in conflict with the application but cited to understand the principle or theory underlying the invention |
| --- | --- |
| "A"   document defining the general state of the art which is not considered to be of particular relevance | |
| "D"   document cited by the applicant in the international application | "X"   document of particular relevance; the claimed invention cannot be considered novel or cannot be considered to involve an inventive step when the document is taken alone |
| "E"   earlier application or patent but published on or after the international filing date | |
| "L"   document which may throw doubts on priority claim(s) or which is cited to establish the publication date of another citation or other special reason (as specified) | "Y"   document of particular relevance; the claimed invention cannot be considered to involve an inventive step when the document is combined with one or more other such documents, such combination being obvious to a person skilled in the art |
| "O"   document referring to an oral disclosure, use, exhibition or other means | |
| "P"   document published prior to the international filing date but later than the priority date claimed | "&"   document member of the same patent family |

| Date of the actual completion of the international search | Date of mailing of the international search report |
| --- | --- |
| **08 March 2024** | **08 March 2024** |

| Name and mailing address of the ISA/KR | Authorized officer |
| --- | --- |
| **Korean Intellectual Property Office<br>Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

| INTERNATIONAL SEARCH REPORT | International application No. |
| Information on patent family members | PCT/KR2023/019933 |

| Patent document cited in search report | | | Publication date (day/month/year) | Patent family member(s) | | | Publication date (day/month/year) |
|---|---|---|---|---|---|---|---|
| KR | 10-2022-0087916 | A | 27 June 2022 | KR | 10-2023-0159353 | A | 21 November 2023 |
| | | | | KR | 10-2603627 | B1 | 16 November 2023 |
| KR | 10-2013-0130818 | A | 02 December 2013 | EP | 2698856 | A1 | 19 February 2014 |
| | | | | EP | 2698856 | A4 | 24 September 2014 |
| | | | | JP | 2012-221819 | A | 12 November 2012 |
| | | | | JP | 4948659 | B1 | 06 June 2012 |
| | | | | US | 2014-0037535 | A1 | 06 February 2014 |
| | | | | WO | 2012-141207 | A1 | 18 October 2012 |
| KR | 10-2021-0120126 | A | 06 October 2021 | CN | 113631507 | A | 09 November 2021 |
| | | | | EP | 3957600 | A1 | 23 February 2022 |
| | | | | EP | 3957600 | A4 | 15 June 2022 |
| | | | | JP | 6909365 | B2 | 28 July 2021 |
| | | | | KR | 10-2403956 | B1 | 02 June 2022 |
| | | | | US | 11618678 | B2 | 04 April 2023 |
| | | | | US | 2022-0098039 | A1 | 31 March 2022 |
| | | | | WO | 2020-213340 | A1 | 22 October 2020 |
| WO | 2022-221729 | A1 | 20 October 2022 | EP | 4315469 | A1 | 07 February 2024 |
| | | | | KR | 10-2024-0000535 | A | 02 January 2024 |
| | | | | US | 2022-0332578 | A1 | 20 October 2022 |
| JP | 2009-176484 | A | 06 August 2009 | None | | | |

Form PCT/ISA/210 (patent family annex) (July 2022)